# EUROPÄISCHE PATENTANMELDUNG

(11) **EP 2 221 207 A1**
(43) Veröffentlichungstag der Anmeldung: **25.08.2010**
(21) Anmeldenummer: 10001565.0
(22) Anmeldetag: 16.02.2010
(51) Int. Cl.: B60K 17/16, B60K 17/356, B60W 10/12, B60K 6/52

(54) **Achsantriebsvorrichtung für eine Achse eines Kraftfahrzeugs sowie Kraftfahrzeug**

(30) Priorität: 20.02.2009 DE 102009009809
(71) Anmelder: Audi AG, 85045 Ingolstadt (DE)
(72) Erfinder: Strasser, Sebastian, 85053 Ingolstadt (DE); Schwarz, Ralf, Dr., 85049 Ingolstadt (DE)
(74) Vertreter: Lehle, Josef

(57) **Zusammenfassung**

Die Erfindung betrifft eine Achsantriebsvorrichtung (4) für eine Achse (2,3) eines Kraftfahrzeugs (1), mit einem Antriebsaggregat (5,13) und einem Differenzial (6,14). Dabei ist vorgesehen, dass das Antriebsaggregat (5) als elektrisches Antriebsaggregat ausgebildet ist und das Differenzial (6) mindestens eine Überlagerungseinheit (7,8) aufweist. Die Erfindung betrifft weiterhin ein Kraftfahrzeug (1).

## Beschreibung

Die Erfindung betrifft eine Achsantriebsvorrichtung für eine Achse eines Kraftfahrzeugs, mit einem Antriebsaggregat und einem Differenzial. Die Erfindung betrifft weiterhin ein Kraftfahrzeug.

Achsantriebsvorrichtungen in der Eingangs genannten Art sind aus dem Stand der Technik bekannt. Bei der überwiegenden Mehrzahl von Kraftfahrzeugen erfolgt der Antrieb nach momentanem Stand der Technik durch ein als Brennkraftmaschine ausgebildetes Antriebsaggregat. Das Antriebsmoment wird dabei über ein Getriebe und Achsgetriebe an Räder des Kraftfahrzeuges übertragen. Bei Allradfahrzeugen erfolgt die Aufteilung des Antriebsmoments auf die Vorder- und Hinterachse über verschiedene Arten von Verteilersystemen. Beispielhaft seien hier ein Mittendifferenzial und eine Kupplung genannt. Mechanische Allradsysteme verteilen insbesondere ab Fahrzeugen einer bestimmten Größenklasse (B-Segment) in der Regel einen hohen Anteil des Antriebsmomentes an die Hinterachse. Ziel dabei ist es, die Vorderachse von der Übertragung eines hohen Antriebsmoments zu entlasten, damit diese zu jeder Zeit ein ausreichend hohes Seitenkraftpotential aufweist und so die von einem Lenksystem des Kraftfahrzeugs aufgeprägte Seitenkraft übertragen kann. Auf diese Weise wird die Neigung des Kraftfahrzeugs zu untersteuern reduziert und eine hohe Fahrzeugagilität erreicht.

Das Differenzial der Achsantriebsvorrichtung ist vorgesehen, um das Antriebsmoment auf an der Achse des Kraftfahrzeugs vorgesehene Räder zu übertragen und gleichzeitig eine Differenzgeschwindigkeit der Räder zuzulassen. Dabei können zwei Bauformen des Differenzials unterschieden werden. Bei einem offenen Differenzial wird das Antriebsmoment immer gleich auf die Räder übertragen, wodurch die Übertragung frei von Giermomenten ist. Wird dagegen ein Sperrdifferenzial verwendet, so kann ein Drehmoment von einem schneller drehenden der Räder auf ein langsamer drehendes der Räder verlagert werden. Ziel der Entwicklung im Kraftfahrzeugbereich ist es in letzter Zeit, das verfügbare Drehmoment in einem Kraftfahrzeug beziehungsweise die darin verbaute Leistung beziehungsweise das verfügbare Drehmoment bei möglichst geringem Kraftstoffverbrauch zu erhöhen und gleichzeitig eine hohe Agilität des Kraftfahrzeugs zu erzielen. Die Ergebnisse der Entwicklung sind jedoch im Hinblick auf den Kraftstoffverbrauch der Kraftfahrzeuge häufig unbefriedigend.

Es ist daher die Aufgabe der Erfindung, eine Achsantriebsvorrichtung für eine Achse eines Kraftfahrzeugs vorzustellen, mit welcher sowohl eine Erhöhung des verfügbaren Drehmoments als auch eine hohe Agilität des Kraftfahrzeugs bei möglichst geringem Kraftstoffverbrauch erzielbar sind.

Dies wird erfindungsgemäß erreicht, indem das Antriebsaggregat als elektrisches Antriebsaggregat ausgebildet ist und das Differenzial mindestens eine Überlagerungseinheit aufweist. Es ist also zunächst das Ziel, ein elektrisches Antriebsaggregat zum antrieb der Achse zu verwenden. Gleichzeitig soll jedoch eine hohe Agilität des Kraftfahrzeugs erreicht werden. Aus diesem Zweck wird dem Differenzial die mindestens eine Überlagerungseinheit zugeordnet. Durch diese Verknüpfung der elektrisch angetriebenen Achse mit dem Differenzial mit der Überlagerungseinheit kann eine kleinere Dimensionierung der benötigten elektrischen Antriebsleistung bei gleichbleibender Agilität erreicht werden. Das Differenzial mit der mindestens einen Überlagerungseinheit wird auch als Überlagerungsdifferenzial bezeichnet und dient der Durchführung von Torque Vectoring. Das bedeutet, dass Drehmoment zu einem Rad umgeleitet werden kann, welchem die Überiagerungseinheit zugeordnet ist. Es kann also gezielt das an einem Rad der Achse anliegende Drehmoment beeinflusst, also sowohl erhöht als auch verringert werden. Die Überlagerungseinheit besteht üblicherweise aus einer Getriebestufe und einer Kupplung. Das Antriebsaggregat kann über eine Kupplung mit dem Differenzial beziehungsweise dem Differenzialkäfig verbunden sein. Das Antriebsaggregat ist in diesem Fall von dem Differenzial beziehungsweise der Achse entkoppelbar. Das Antriebsaggregat wird insbesondere dann von dem Differenzial entkoppelt, wenn nicht ausreichend Energie zum Betrieb des Antriebsaggregats vorhanden ist beziehungsweise kein zusätzliches Moment für einen Fahrbetrieb des Kraftfahrzeugs benötigt wird. In jedem Fall ist jedoch das an dem Rad beziehungsweise an den Rädern anliegende Drehmoment beeinflussbar. Das bedeutet, dass das Drehmoment zu einem der Räder umgeleitet werden kann, auch wenn kein Antriebsmoment von dem Antriebsaggregat erzeugt oder auf die Welle übertragen wird. Durch die Kombination von elektrischem Antriebsaggregat und dem Differenzial mit der Überlagerungseinheit wird das Fahrverhalten des Kraftfahrzeugs primär durch die damit erzielbare variable Momentenverteilung geprägt. Es ist vorgesehen, dass zum Antrieb der Achse die Achsantriebsvorrichtung lediglich das elektrische Antriebsaggregat aufweist. Es ist also gerade nicht vorgesehen, ein Moment eines weiteren Antriebsaggregats beispielsweise über ein Verteilergetriebe und eine Kardanwelle an die Achsantriebsvorrichtung abzugeben.

Weitere vorteilhafte Ausgestaltungen ergeben sich aus den Unteransprüchen.

Eine Weiterbildung der Erfindung sieht vor, dass das elektrische Antriebsaggregat als Generator verwendbar ist. Um den Kraftstoffverbrauch des Kraftfahrzeugs zu senken, soll, insbesondere bei einem Verzögern des Kraftfahrzeugs, mittels des elektrischen Antriebsaggregats ein Rekuperationsbetrieb durchgeführt werden. Zu diesem Zweck wird das Antriebsaggregat als Generator verwendet. Das bedeutet, dass das Kraftfahrzeug durch ein beim generatorischen Betrieb des Antriebsaggregats erzeugtes Drehmoment gebremst wird, wobei elektrische Energie erzeugt wird. Auf diese Weise lassen sich die Verbrauchsvorteile der Achsantriebsvorrichtung mit dem elektrischen Antriebsaggregat in vollem Umfang nutzen. Insbesondere ist es dabei vorgesehen, die während dem Rekuperationsbetrieb erzeugte elektrische Energie zu speichern und nachfolgend zum Antrieb des Kraftfahrzeugs zu verwenden. Es ist also gerade nicht vorgesehen, die erforderliche elektrische Antriebsleistung für das Antriebsaggregat durch eine Brennkraftmaschine zu erzeugen, was einem seriellen Betrieb einer Hybridantriebsvorrichtung entspricht. Dies kann jedoch dazu führen, dass das elektrische Antriebsaggregat nicht genutzt werden kann, wenn keine gespeicherte elektrische Energie verfügbar ist. Da die Achsantriebsvorrichtung jedoch das Differenzial mit der mindestens einen Überlagerungseinheit aufweist, kann, unabhängig von der Verfügbarkeit von Energie für das elektrische Antriebsaggregat, das Fahrverhalten des Kraftfahrzeugs beeinflusst werden, indem mittels des Differenzials beziehungsweise der Überlagerungseinheit ein Drehmoment zwischen an der Achse des Kraftfahrzeugs vorgesehenen Rädern verteilt wird. Dies gilt auch für den generatorischen Betrieb des Antriebsaggregats.

Eine weitere Ausgestaltung der Erfindung sieht vor, dass die Überlagerungseinheit mittels einer steuer- und/oder regelbaren Kupplung einstellbar ist. Durch ein Ansteuern der Kupplung kann somit Drehmoment auf die Räder der Achse verteilt werden. Dabei ist vorgesehen, dass die Kupplung im Wesentlichen stufenlos ansteuer- beziehungsweise regelbar ist. Eine Aktuierung der Kupplung führt zu einer Beschleunigung des jeweiligen Rades und damit zu einer Momentenverlagerung zu diesem Rad. Besonders vorteilhaft kann die Kupplung derart angesteuert beziehungsweise geregelt werden, dass das Drehmoment eines der Räder zwischen Null und dem gesamten durch das Antriebsaggregat erzeugten Drehmoment eingestellt werden kann. Der besondere Vorteil ist, dass unabhängig vom Antriebsmoment ein Differenzmoment zwischen den Rädern der Achse eingestellt werden kann. Das heißt, dass der mögliche Momentenbereich an jedem Rad erstreckt sich von -0,5 Mₘₐₓ bis zu +0,5 Mₘₐₓ für den Fall, dass kein Antriebsmoment vorliegt. Im Antriebsfall ist das vorliegende Antriebsmoment hinzuzuaddieren.

Nach einer vorteilhaften Weiterbildung der Erfindung ist vorgesehen, dass über die oder mittels der Kupplung ein Drehmoment von der Überlagerungseinrichtung auf einen Achsabschnitt aufgebracht wird. Die Kupplung ist also dazu in einer ersten Ausführungsform dazu vorgesehen, ein Drehmoment zwischen der Überlagerungseinrichtung und dem Achsabschnitt zu übertragen. An dem Achsabschnitt ist mindestens eines der Räder der Achse vorgesehen. Es ist also nicht nur, wie in einer zweiten Ausführungsform, vorgesehen, dass durch ein Betätigen der Kupplung das Drehmoment auf den Achsabschnitt aufgebracht wird, sondern dass dieses unmittelbar über die Kupplung auf den Achsabschnitt geleitet wird. Ist die Kupplung steuer- beziehungsweise regelbar, so kann das auf den Achsabschnitt aufgebrachte Drehmoment eingestellt werden.

Eine Weiterbildung der Erfindung sieht vor, dass die Achsantriebsvorrichtung für eine Vorderachse und/oder eine Hinterachse des Kraftfahrzeugs vorgesehen ist. Bevorzugt ist die Achsantriebsvorrichtung für die Hinterachse des Kraftfahrzeugs ausgelegt. Prinzipiell kann aber jede beliebige Achse mit dem elektrischen Antriebsaggregat und dem Differenzial mit Überlagerungseinheit ausgerüstet sein. Ist die Achsantriebsvorrichtung bei einem allradgetriebenen Kraftfahrzeug an der Hinterachse vorgesehen, so lassen sich die Agilitätsvorteile der vorstehend beschriebenen heckbetonten Auslegung des Allradantriebs - also insbesondere das ausreichend hohe Seitenkraftpotential zu jeder Zeit - auch mit der mittels des elektrischen Antriebsaggregats angetriebenen Achsantriebsvorrichtung erzielen. Das Fahrverhalten mit der heckbetonten Auslegung wird bei dieser Anordnung nicht nur mit dem elektrischen Antriebsaggregat, sondern primär mittels der Überlagerungseinheit erzielt.

In einer bevorzugten Weiterbildung ist mindestens eine weitere Achse vorgesehen, der ein eigenes Antriebsaggregat zugeordnet ist. Dieses Antriebsaggregat kann beispielsweise eine Brennkraftmaschine, ein elektrisches Antriebsaggregat oder ein Hybridantrieb sein. Auf diese Weise lassen sich mehrere Achsen des Kraftfahrzeugs mittels jeweils eines Antriebsaggregats antreiben. Beispielsweise kann an der Vorderachse des Kraftfahrzeugs eine Brennkraftmaschine und an der Hinterachse das elektrische Antriebsaggregat sowie das Differenzial mit der mindestens einen Überlagerungseinheit vorgesehen sein. Somit liegt ein Hybridantrieb vor, der die Momente des elektrischen Antriebsaggregats und des Antriebsaggregats der weiteren Achse über einen Untergrund des Kraftfahrzeugs koppelt.

Nach einer Weiterbildung der Erfindung ist vorgesehen, dass das Antriebsaggregat verwendbar ist, um ein Differenzdrehmoment zwischen einem angeforderten Solldrehmoment und dem von dem Antriebsaggregat der weiteren Achse erzeugbaren und/oder übertragbaren Drehmoment zu erzeugen. Wenn das Solldrehmoment von dem Antriebsaggregat der weiteren Achsen nicht erreicht werden kann, soll die Drehmomentdifferenz von dem Antriebsaggregat der Achsantriebsvorrichtung ausgeglichen werden. Das Solldrehmoment ist beispielsweise das von einem Fahrer des Kraftfahrzeugs vorgegebene Drehmoment. Das Moment des Antriebsaggregats der weiteren Achse kann beispielsweise durch ein maximal erzeugbares Drehmoment limitiert sein. Es kann jedoch auch der Fall eintreten, dass das Drehmoment dieses Antriebsaggregats nicht auf einen Untergrund des Kraftfahrzeugs übertragen werden kann, also nicht mehr zu einem Vortrieb des Kraftfahrzeugs zur Verfügung steht. Dies kann beispielsweise der Fall sein, wenn das Kraftfahrzeug während einer Kurvenfahrt beschleunigt oder bei schlechter Haftung auf dem Untergrund angefahren werden soll. Es ist insbesondere vorgesehen, dass das Antriebsaggregat lediglich für den Ausgleich des Differenzdrehmoments betrieben wird. Damit sind die Anforderungen an die elektrische Dauerleistung des Antriebsaggregats gering, womit er kleiner dimensioniert werden kann. Zusätzlich kann das Antriebsaggregat verwendet werden, um ein Bremsmoment zur Verfügung zu stellen, um insbesondere einen Rekuperationsbetrieb durchzuführen und dabei elektrische Energie aus dem Bremsmoment zurückzugewinnen.

Eine weitere Ausgestaltung der Erfindung sieht vor, dass das Differenzial ein KegelradDifferenzial oder ein Planetenraddifferenzial ist. Es sind jedoch auch andere Bauformen des Differenzials verwendbar.

Eine Weiterbildung der Erfindung sieht vor, dass mindestens eine Überlagerungseinheit einem ersten Achsabschnitt und/oder einem zweiten Achsabschnitt zugeordnet ist. Der erste beziehungsweise der zweite Achsabschnitt stehen in Wirkverbindung mit Rädern des Kraftfahrzeugs. Diese sind somit über den ersten beziehungsweise zweiten Achsabschnitt antreibbar. Es kann nun vorgesehen sein, dass lediglich dem ersten oder dem zweiten Achsabschnitt die Überlagerungseinheit zugeordnet ist. Alternativ ist vorgesehen, sowohl an dem ersten als auch an dem zweiten Achsabschnitt jeweils eine Überlagerungseinheit vorzusehen. Sind die Überlagerungseinheiten auf einer Seite des Differenzials angeordnet, so ergibt sich eine asymmetrische Anordnung, während bei einer Anordnung an beiden Achsabschnitten eine symmetrische Anordnung vorliegt.

Eine bevorzugte Weiterbildung sieht vor, dass das Antriebsaggregat orthogonal, achsparallel oder koaxial zu der Achse vorgesehen ist. Das bedeutet, dass das Antriebsaggregat beziehungsweise eine Achse des Antriebsaggregats auf verschiedene Weise in Bezug zu der Achsantriebsvorrichtung angeordnet sein kann.

Eine Weiterbildung der Erfindung sieht vor, dass die Achsantriebsvorrichtung als Allradantriebsvorrichtung des Kraftfahrzeugs ausgebildet ist. Somit stehen alle Räder des Kraftfahrzeugs mit der Achsantriebsvorrichtung gemäß den vorstehenden Ausführungen in Wirkverbindung. Üblicherweise bedeutet dies, dass die Achsantriebsvorrichtung sowohl für die Vorderachse als auch für die Hinterachse des Kraftfahrzeugs verwendet wird. Es kann jedoch auch der Fall sein, dass das Kraftfahrzeug mehr als zwei Achsen aufweist. In diesem Fall sind alle Achsen des Kraftfahrzeugs mit der Achsantriebsvorrichtung gemäß den vorstehenden Ausführungen antreibbar.

Die Erfindung betrifft weiterhin ein Kraftfahrzeug mit einer Achsantriebsvorrichtung, insbesondere gemäß den vorstehenden Ausführungen, für eine Achse des Kraftfahrzeugs, mit einem Antriebsaggregat und einem Differenzial. Dabei ist vorgesehen, dass das Antriebsaggregat als elektrisches Antriebsaggregat ausgebildet ist und das Differenzial mindestens eine Überlagerungseinheit aufweist.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung eines Kraftfahrzeugs mit einer Vorder- und einer Hinterachse, wobei die Hinterachse eine Achsantriebsvorrichtung mit einem elektrischen Antriebsaggregat und einem Differenzial mit mindestens einer Überlagerungseinheit aufweist,
- Figur 2: eine schematische Darstellung der Achsantriebsvorrichtung mit dem Antriebsaggregat und dem Differenzial mit zwei Überlagerungseinheiten in einer ersten, symmetrischen Ausführungsform,
- Figur 3: die Achsantriebsvorrichtung in einer weiteren, symmetrischen Ausführungsform, und
- Figur 4: eine dritte, asymmetrische Ausführungsform der Achsantriebsvorrichtung.

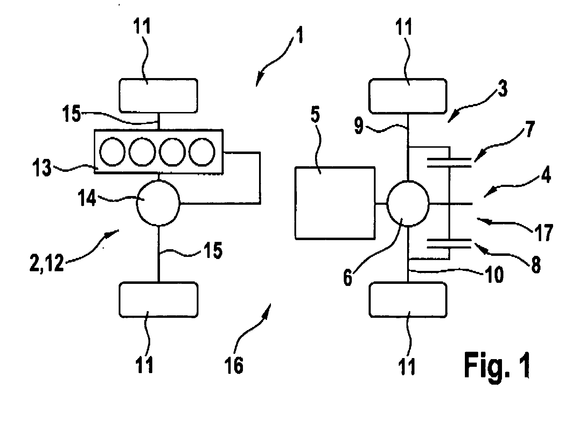

Die Figur 1 zeigt ein Kraftfahrzeug 1 mit einer Vorderachse 2 und einer Hinterachse 3. Die Hinterachse 3 verfügt über eine Achsantriebsvorrichtung 4 mit einem Antriebsaggregat 5, welches als elektrisches Antriebsaggregat, beispielsweise als Elektromotor, ausgebildet ist und einem Differenzial 6. Das Differenzial 6 weist eine erste Überlagerungseinheit 7 und eine zweite Überlagerungseinheit 8 auf, wobei die erste Überlagerungseinheit 7 einem ersten Achsabschnitt 9 und die zweite Überlagerungseinheit 8 einem zweiten Achsabschnitt 10 zugeordnet ist. Die Achsabschnitte 9 und 10 sind jeweils mit Rädern 11 des Kraftfahrzeugs verbunden. Die Vorderachse 2 des Kraftfahrzeugs stellt eine weitere Achse 12 der Achsantriebsvorrichtung 4 dar. Der Achse 12 ist ein als Brennkraftmaschine ausgebildetes eigenes Antriebsaggregat 13 zugeordnet, welches über ein Differenzial 14 mit Achsabschnitten 15 der Vorderachse 2 in Verbindung steht, wobei die Achsabschnitte 15 ihrerseits mit Rädern 11 verbunden sind. Die Achsantriebsvorrichtung 4 bildet also eine Allradantriebsvorrichtung 16.

Das Differenzial 6 und die Überlagerungseinheiten 7 und 8 an der Hinterachse 3 des Kraftfahrzeugs 1 stellen ein Überlagerungsdifferenzial 17 dar. Durch die Verknüpfung des elektrischen Antriebsaggregats 5 mit einem solchen Überlagerungsdifferenzial 17 kann eine kleinere Dimensionierung der benötigten elektrischen Antriebsleistung erreicht werden. Mittels des Überlagerungsdifferenzials 17 kann das von dem Antriebsaggregat 5 erzeugte Drehmoment nahezu beliebig auf die Achsabschnitte 9 und 10 beziehungsweise auf die damit in Verbindung stehenden Räder 11 übertragen werden. Es kann also beispielsweise wahlweise das gesamte von dem Antriebsaggregat 5 erzeugte Drehmoment an den ersten Achsabschnitt 9 oder an den zweiten Achsabschnitt 10 beziehungsweise gleichmäßig auf diese verteilt aufgebracht werden. Das Überlagerungsdifferenzial 17 arbeitet dabei im Sinne eines Torque-Vectoring-Systems. Das Fahrverhalten des Kraftfahrzeugs 1 kann auf diese Weise entscheidend beeinflusst werden und wird hauptsächlich durch die beschriebene variable Drehmomentenverteilung des Torque-Vectoring-Systems geprägt. Eine Betätigung der Überlagerungseinheit 7 und 8 führt zu einer Beschleunigung des jeweiligen Rads 11 und damit zu einer Momentenverteilung zu diesem. Es ist ausdrücklich vorgesehen, dass das Differenzial 6 nicht über ein Verteilergetriebe und eine Kardanwelle sondern von dem elektrischen Antriebsaggregat 5 angetrieben wird.

Durch das Überlagerungsdifferenzial 17 ergibt sich der Vorteil, dass unabhängig von dem Betriebszustand des elektrischen Antriebsaggregats 5 das Fahrverhalten des Kraftfahrzeugs 1 beeinflusst werden kann. Dies gilt also ebenso dann, wenn lediglich eine geringe Menge beziehungsweise keine elektrische Energie zum Betreiben des Antriebsaggregats 5 verfügbar ist. Der Betrieb des elektrischen Antriebsaggregats 5 ist bei dem hier dargestellten Kraftfahrzeug 1 zudem nur dann erforderlich, wenn an der Vorderachse 2 nicht das vollständige, von einem Fahrer angeforderte Soll-Drehmoment erzeugt oder übertragen werden kann. In ersterem Fall kann durch das Antriebsaggregat 5 das Drehmoment des Antriebsaggregats 13 ergänzt werden. Der zweite Fall kann beispielsweise auftreten, wenn das Kraftfahrzeug 1 während einer Kurvenfahrt stark beschleunigt wird oder auf einem Untergrund mit einem niedrigen Reibwert angefahren werden soll. In beiden Fällen kann es dazu kommen, dass das von dem Antriebsaggregat 13 erzeugte Drehmoment nicht über die Räder 11 auf den Untergrund des Kraftfahrzeugs 1 übertragen werden kann, sodass das Soll-Drehmoment nicht erreicht wird. In diesem Fall wird das Antriebsaggregat 5 aktiviert, sodass mit dem zusätzlich erzeugten Drehmoment das Drehmoment des Antriebsaggregats 13 ergänzt wird.

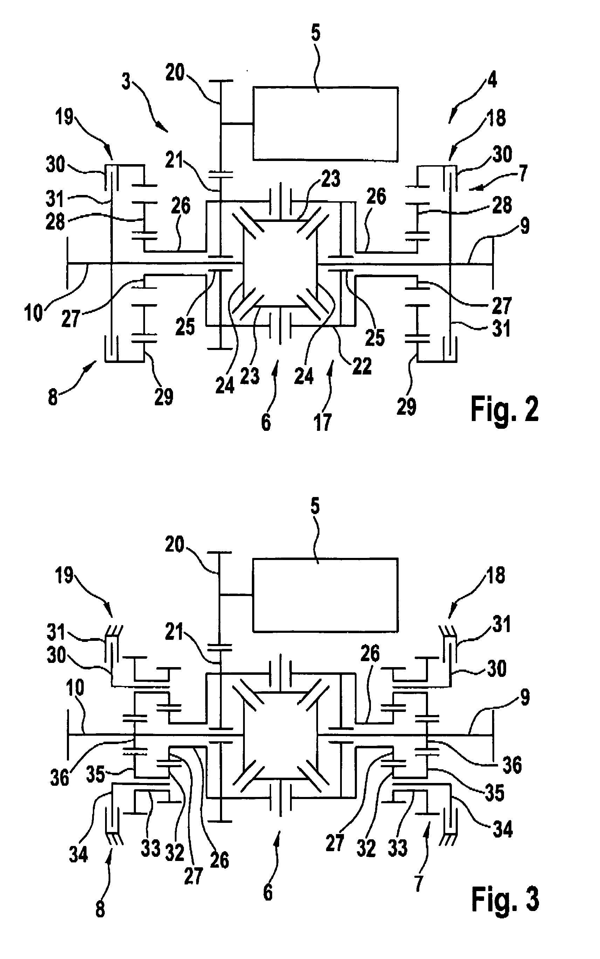

Die Figur 2 zeigt eine erste Ausführungsform der Achsantriebsvorrichtung 4, wobei die Hinterachse 3 dargestellt ist. Zu erkennen ist das Antriebsaggregat 5, das Differenzial 6 sowie die erste Überlagerungseinheit 7 und die zweite Überlagerungseinheit 8. Das Differenzial 6 bildet mit den Überlagerungseinheiten 7 und 8 das Überlagerungsdifferenzial 17. Über das Überlagerungsdifferenzial 17 wird das von dem Antriebsaggregat 5 erzeugte Drehmoment auf den ersten Achsabschnitt 9 und den zweiten Achsabschnitt 10 aufgeteilt. Zum Einstellen der Überlagerungseinheiten 7 und 8 sind eine erste Kupplung 18 und eine zweite Kupplung 19 vorgesehen. Diese sind voneinander unabhängig steuer- und/oder regelbar. In dem in Figur 2 dargestellten Ausführungsbeispiel ist es vorgesehen, dass über die Kupplungen 18 und 19 ein Drehmoment von der jeweiligen Überlagerungseinheit 7 oder 8 auf den jeweiligen Achsabschnitt 9 oder 10 aufgebracht wird. Das Antriebsaggregat 5 ist achsparallel zu der Hinterachse 3 vorgesehen.

Das Antriebsaggregat 5 treibt über ein Zahnrad 20 ein Stirnrad 21 an, welches mit einem Differenzialkäfig 22 des Differenzials 6 drehfest verbunden ist. In dem Differenzialkäfig 22 sind mehrere Ausgleichsräder 23 gelagert. Diese sind als Kegelräder ausgebildet und kämmen mit auf den Achsabschnitten 9 und 10 drehfest angeordneten Kegelrädern 24. Der Differenzialkäfig 22 weist Lager 25 auf, mit welchen er auf den Achsabschnitten 9 und 10 gelagert ist. An den Differenzialkäfig 22 schließt sich für jede der Überlagerungseinheiten 7 und 8 eine Hohlwelle 26 an, die zu den Achsabschnitten 9 und 10 koaxial sind. Auf den Hohlwellen 26 ist jeweils ein Zahnrad 27 angeordnet, welches jeweils mit einem Zahnring 28 kämmt. Auf der dem Zahnrad 27 abgewandten Seite greift der Zahnring 28 in ein Hohlrad 29 ein, welches mit einer Primärseite 30 der Kupplungen 18 und 19 drehfest verbunden ist. Eine Sekundärseite 31 der Kupplungen 18 und 19 ist jeweils drehfest mit den Achsabschnitten 9 und 10 verbunden. Über ein Öffnen beziehungsweise Schließen der Kupplungen 18 und 19 kann also das von dem Antriebsaggregat 5 erzeugte Drehmoment zwischen den Achsabschnitten 9 und 10 verlagert werden. Wird die erste Kupplung 18 betätigt, so wird der erste Achsabschnitt 9 beschleunigt beziehungsweise ein höheres Drehmoment auf diesen übertragen, während gleichzeitig das an dem zweiten Achsabschnitt 10 anliegende Drehmoment verringert wird. Alternativ kann es natürlich vorgesehen sein, dass lediglich eine der beiden Überlagerungseinheiten 7 und 8 vorgesehen ist. In diesem Fall ergibt sich ein asymmetrischer Aufbau des Überlagerungsdifferenzials 17.

Die Figur 3 zeigt eine weitere Ausführungsform der Achsantriebsvorrichtung 4. Der Unterschied zu dem in der Figur 2 gezeigten Ausführungsbeispiel zeigt sich darin, dass mittels der Kupplungen 18 und 19 kein Drehmoment unmittelbar auf die Achsabschnitte 9 und 10 übertragen werden kann. Die Kupplungen 18 und 19 dienen in diesem Fall lediglich dazu, die Verteilung des Drehmoments auf die Achsabschnitte 9 und 10 zu beeinflussen. Wie bereits anhand der Figur 2 erläutert, wird das von dem Antriebsaggregat 5 erzeugte Drehmoment an das Differenzial 6 übertragen, welches den bereits beschriebenen Aufbau hat. Das auf der Hohlwelle 26 angeordnete Zahnrad 27 kämmt in diesem Fall mit einem ersten Zahnrad 32 mindestens eines Planetenrads 33. Das Planetenrad 33 ist in einem Planetenradträger 34 drehbeweglich gelagert, wobei dieser selbst koaxial mit dem Achsabschnitt 9 oder 10 drehbar ist. Über den Umfang des Planetenradträgers 34 können mehrere Planetenräder 33 angeordnet sein. Ein zweites Zahnrad 35 des Planetenrads 33 kämmt mit einem auf dem Achsabschnitt 9 beziehungsweise 10 angeordneten Zahnrad 36. Über dieses kann ein Moment aus der Überlagerungseinheit 7 und 8 auf den Achsabschnitt 9 oder 10 geleitet werden. Der Planetenradträger 34 bildet die Primärseite 30 der Kupplungen 18 und 19, während die Sekundärseite 31 ortsfest gelagert, also beispielsweise an einem Gehäuse der Achsantriebsvorrichtung 4 befestigt ist.

Solange die Kupplungen 18 und 19 geöffnet sind, kann sich der Planetenradträger 34 frei drehen. In diesem Fall wird kein Drehmoment über das Zahnrad 36 an die Achsabschnitte 9 und 10 abgegeben. Wird die Kupplung 18 oder 19 angesteuert, so wird dadurch der Planetenradträger 34 verzögert. Daraufhin wird Drehmoment aus der Überlagerungseinheit 7 beziehungsweise 8 an den jeweiligen Achsabschnitt 9 beziehungsweise 10 abgegeben. Auf diese Weise kann die Verteilung des von dem Antriebsaggregat 5 erzeugten Drehmoments auf die Achsabschnitte 9 und 10 eingestellt werden. So kann ein einem der Achsabschnitte 9 oder 10 zugeordnetes Rad 11 gezielt abgebremst oder beschleunigt werden.

Es ist auch möglich, bei abgeschaltetem Antriebsaggregat 5 Drehmoment von einem der Achsabschnitte 9 oder 10 auf den jeweils anderen Achsabschnitt 10 oder 9 zu übertragen, das heißt, ein dem einen Achsabschnitt 9 oder 10 zugeordnetes Rad wird abgebremst, während das dem jeweils anderen Achsabschnitt 10 oder 9 zugeordnete Rad 11 beschleunigt wird. Auf diese Weise kann auch zu einem Zeitpunkt, zu welchem das Antriebsaggregat 5 nicht betrieben werden soll beziehungsweise kann, eine Erhöhung der Agilität des Kraftfahrzeugs 1 erreicht werden.

Ein Betreiben des Antriebsaggregats 5 kann beispielsweise nicht vorgesehen sein, wenn mittels des Antriebsaggregats 13, also dem der Vorderachse 2 des Kraftfahrzeugs 1 zugeordneten Antriebsaggregats, ausreichend Drehmoment erzeugt beziehungsweise auf einen Untergrund des Kraftfahrzeugs 1 übertragen werden kann. Das Antriebsaggregat 5 wird somit lediglich betrieben, wenn das von dem Antriebsaggregat 13 erzeugte Drehmoment zu niedrig ist beziehungsweise nicht auf den Untergrund übertragen werden kann (beispielsweise aufgrund eines niedrigen Reibwerts). Es kann zusätzlich vorgesehen sein, dass eine Kupplung (nicht dargestellt) zwischen dem Antriebsaggregat 5 und dem Differenzial 6 angeordnet ist, sodass diese voneinander entkoppelt werden können.

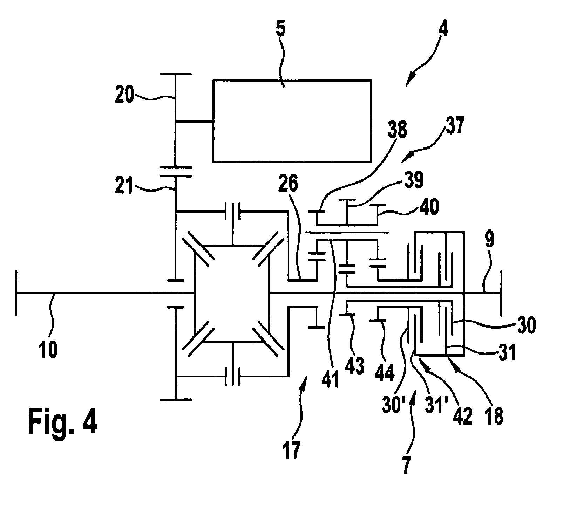

Die Figur 4 zeigt eine dritte Ausführungsform der Achsantriebsvorrichtung 4. Der generelle Aufbau der dargestellten Achsantriebsvorrichtung 4 entspricht dem in den Figuren 2 und 3 gezeigten. Es wird daher auf die entsprechenden Ausführungen verwiesen und im Folgenden lediglich die Unterschiede dargestellt. Die Überlagerungseinheiten 7 und 8 sind hier nicht symmetrisch um das Differenzial 6 angeordnet, sondern befinden sich auf einer Seite des Differenzials 6. Die Wirkweise entspricht der bereits beschriebenen. Die an den Differenzialkäfig 22 angeschlossene Hohlwelle 26 treibt über das Zahnrad 27 ein Überlagerungsgetriebe 37 an Dieses weist zu diesem Zweck ein mit dem Zahnrad 27 kämmendes erstes Zahnrad 38 auf. Das Überlagerungsgetriebe 37 verfügt ebenso Ober ein zweites Zahnrad 39 und ein drittes Zahnrad 40, die zusammen mit dem ersten Zahnrad 38 auf einer gemeinsamen Welle 41 drehfest angeordnet sind. Ohne Aktuierung der Kupplung 18 und einer weiteren Kupplung 42 erfolgt eine symmetrische Aufteilung des Antriebsmoments auf die Achsabschnitte 8 und 9. Die Zahnradstufen 27 und 38, 39 und 43 sowie 40 und 44 laufen zusammen mit der Hohlwelle 26 ohne Last mit.

Die Überlagerungseinheiten 7 und 8 weisen in dieser Bauform sowohl die erste Kupplung 18 als auch eine weitere Kupplung 42 auf. Die Primärseite 30 der ersten Kupplung 18 ist über ein mit dem Zahnrad 39 kämmendes Zahnrad 43 mit diesem wirkverbunden. Ebenso ist die Primärseite 30' der zweiten Kupplung 18 über ein mit dem Zahnrad 40 kämmendes Zahnrad 44 mit diesem wirkverbunden. Die Sekundärseiten 31 und 31' der Kupplungen 18 und 42 sind mit dem ersten Achsabschnitt 9 verbunden. Es ist vorgesehen, dass die Zahnräder 39 und 43 beziehungsweise 40 und 44 jeweils ein unterschiedliches Übersetzungsverhältnis ausbilden. Auf den Primärseiten 30 und 30' der Kupplungen 17 und 42 liegen also unterschiedliche Drehzahlen an. Je nachdem, welche der Kupplungen 17 und 42 angesteuert wird, wird dem Achsabschnitt 9 eine höhere beziehungsweise niedrigere Drehzahl aufgeprägt. Dies resultiert in einem höheren oder geringeren Moment am Rad 11. Durch die ausgleichende Wirkung des Differenzials 6 hat die Erhöhung oder Verringerung der Drehgeschwindigkeit von Achsabschnitt 9 direkten Einfluss auf die Drehgeschwindigkeit am Achsabschnitt 10.

### BEZUGSZEICHENLISTE

- 1: Kraftfahrzeug
- 2: Vorderachse
- 3: Hinterachse
- 4: Achsantriebsvorrichtung
- 5: Antriebsaggregat
- 6: Differenzial
- 7: erste Überlagerungseinheit
- 8: zweite Überlagerungseinheit
- 9: erster Achsabschnitt
- 10: zweiter Achsabschnitt
- 11: Rad
- 12: weitere Achse
- 13: Antriebsaggregat
- 14: Differenzial
- 15: Achsabschnitt
- 16: Allradantriebsvorrichtung
- 17: Überlagerungsdifferenzial
- 18: erste Kupplung
- 19: zweite Kupplung
- 20: Zahnrad
- 21: Stirnrad
- 22: Differenzialkäfig
- 23: Ausgleichsräder
- 24: Kegelrad
- 25: Lager
- 26: Hohlwelle
- 27: Zahnrad
- 28: Zahnring
- 29: Hohlrad
- 30: Primärseite
- 30': Primärseite
- 31: Sekundärseite
- 31': Sekundärseite
- 32: erstes Zahnrad
- 33: Planetenrad
- 34: Planetenradträger
- 35: zweites Zahnrad
- 36: Zahnrad
- 37: Überlagerungsgetriebe
- 38: 1. Zahnrad
- 39: 2. Zahnrad
- 40: 3. Zahnrad
- 41: Welle
- 42: weitere Kupplung
- 43: Zahnrad
- 44: Zahnrad

## Patentansprüche

1. Achsantriebsvorrichtung (4) für eine Achse (2,3) eines Kraftfahrzeugs (1), mit einem Antriebsaggregat (5,13) und einem Differenzial (6,14), **dadurch gekennzeichnet, dass** das Antriebsaggregat (5) als elektrisches Antriebsaggregat ausgebildet ist und das Differenzial (6) mindestens eine Überlagerungseinheit (7,8) aufweist.

2. Achsantriebsvorrichtung nach Anspruch 1, **dadurch gekennzeichnet, dass** das elektrische Antriebsaggregat (5) als Generator verwendbar ist.

3. Achsantriebsvorrichtung nach einem der vorhergehenden Ansprüche, **dadurch gekennzeichnet, dass** die Überlagerungseinheit (7,8) mittels einer steuer- und/oder regelbaren Kupplung (18,19) einstellbar ist.

4. Achsantriebsvorrichtung nach einem der vorhergehenden Ansprüche, **dadurch gekennzeichnet, dass** über die oder mittels der Kupplung (18,19) ein Drehmoment von der Überlagerungseinrichtung (7,8) auf einen Achsabschnitt (9,10) aufgebracht wird.

5. Achsantriebsvorrichtung nach einem der vorhergehenden Ansprüche, **dadurch gekennzeichnet, dass** sie für eine Vorderachse (2) und/oder eine Hinterachse (3) des Kraftfahrzeugs (1) vorgesehen ist.

6. Achsantriebsvorrichtung nach einem der vorhergehenden Ansprüche, **gekennzeichnet durch** mindestens eine weitere Achse (12), der ein eigenes Antriebsaggregat (13) zugeordnet ist.

7. Achsantriebsvorrichtung nach einem der vorhergehenden Ansprüche, **dadurch gekennzeichnet, dass** das Antriebsaggregat (5) verwendbar ist, um ein Differenzmoment zwischen einem angeforderten Solldrehmoment und dem von dem Antriebsaggregat (13) der weiteren Achse (12) erzeugbaren und/oder übertragbaren Drehmoment zu erzeugen.

8. Achsantriebsvorrichtung nach einem der vorhergehenden Ansprüche, **dadurch gekennzeichnet, dass** das Differenzial (6) ein Kegelraddifferenzial oder ein Planetenraddifferenzial ist.

9. Achsantriebsvorrichtung nach einem der vorhergehenden Ansprüche, **dadurch gekennzeichnet, dass** mindestens eine Überlagerungseinheit (7,8) einem ersten Achsabschnitt (9) und/oder einem zweiten Achsabschnitt (10) zugeordnet ist.

10. Achsantriebsvorrichtung nach einem der vorhergehenden Ansprüche, **dadurch gekennzeichnet, dass** das Antriebsaggregat (5) orthogonal, achsparallel oder koaxial zu der Achse (3) vorgesehen ist.

11. Achsantriebsvorrichtung nach einem der vorhergehenden Ansprüche, **dadurch gekennzeichnet, dass** sie als Allradantriebsvorrichtung (16) des Kraftfahrzeugs (1) ausgebildet ist.

12. Kraftfahrzeug (1) mit einer Achsantriebsvorrichtung (4), insbesondere gemäß einem oder mehreren der vorhergehenden Ansprüche, für eine Achse (2,3) des Kraftfahrzeugs (1), mit einem Antriebsaggregat (5,13) und einem Differenzial (6,14), **dadurch gekennzeichnet, dass** das Antriebsaggregat (5) als elektrisches Antriebsaggregat ausgebildet ist und das Differenzial (6) mindestens eine Überlagerungseinheit (7,8) aufweist.
